# EUROPÄISCHE PATENTANMELDUNG

(11) **EP 0 613 993 A1**
(43) Veröffentlichungstag der Anmeldung: **07.09.1994**
(21) Anmeldenummer: 94102925.8
(22) Anmeldetag: 25.02.1994
(51) Int. Cl.: E21D 21/00, F16B 13/08, F16B 35/02, E21F 17/02

(54) **Dübel zur Befestigung von Lasten an Hohlraumdecken**

(30) Priorität: 27.02.1993 DE 4306175
(71) Anmelder: Kunkel, Horst, D-66127 Saarbrücken (DE)
(72) Erfinder: Kunkel, Horst, D-66127 Saarbrücken (DE)
(74) Vertreter: Vièl, Georg, Dipl.-Ing.

(57) **Zusammenfassung**

Die Erfindung bezieht sich auf einen Dübel (1) zur Befestigung von Lasten an Hohlraumdecken, wobei an einem Ende des Dübels ein Tragelement (3) vorgesehen ist, das durch eine Bohrung in einen Hohlraum der Decke einführbar ist und das zwecks Verankerung des Dübels in einem Hohlraum im eingebauten Zustand in diesem Hohlraum senkrecht zur Längsachse des Dübels angeordnet ist.

Die wesentlichen Merkmale der Erfindung bestehen darin, daß der Dübel aus zwei zusammenwirkenden Teilelementen (1a,1b) besteht, die am oberen Ende Tragelemente (3) aufweisen und deren untere Enden z.B. als Laschen (5) oder halbkreisförmige Gewindestäbe (6) ausgebildet sind und als Befestigung von anhängenden Lasten sowie zum festen Verbinden der beiden Teilelemente dienen. Die Tragelemente (3) sind so dimensioniert, daß sie nacheinander durch eine entsprechende Bohrung in den Hohlraum der Decke einführbar sind. Bei der Montage werden die Teilelemente (3) miteinander verschraubt, wobei die Tragelemente sich auf dem hohlraumseitigen Rand der Bohrung abstützen, den Dübel (1) in dem Hohlraum verankern und ein Lösen des Dübels aus der Bohrung verhindern.

Die mit der Erfindung erzielten Vorteile bestehen im wesentlichen darin, daß der Dübel kostengünstig herstellbar ist, eine schnelle und sichere Montage und Demontage erlaubt und nur sehr geringe Hohlraumtiefen erforderlich sind.

## Beschreibung

Die Erfindung betrifft einen Dübel zur Befestigung von Lasten an Hohlraumdecken, bestehend aus zwei zusammenwirkenden Teilelementen, die durch eine Bohrung in einen Hohlraum der Decke einführbar und an den einander zugewandten rückseitigen Flächen ihres Schafts aneinanderfügbar sind und jeweils am einführungsseitigen Ende einen als Tragelement dienenden, senkrecht zur Längsachse des Dübels nach aussen abstehenden Vorsprung aufweisen, der an der Rückseite der Hohlraumdecke abstützbar ist, wobei der untere Bereich der aus dem Bohrloch herausragenden Abschnitte der Teilelemente als Befestigung für Lasten ausgebildet ist und die beiden Teilelemente miteinander verbindbar sind.

Zur Montage an Hohlraumdecken und Hohlwänden werden am Markt eine Reihe von verschiedenartigen Dübeln angeboten. Der Kippdübel beispielsweise besteht im allgemeinen aus einer Gewindestange, an deren einem äußeren Ende ein bevorzugt als U-Profil ausgebildetes Tragelement angeordnet ist, das um eine an der Gewindestange befestigte Achse kippbar ist. Beim Setzen des Dübels wird das Tragelement parallel zur Längsachse der Gewindestange ausgerichtet, wobei die Gewindestange innerhalb des U-Profils verläuft, und durch ein entsprechend dimensioniertes Bohrloch in einen Hohlraum der Decke bzw. Wand eingeführt. In dem Hohlraum stellt sich das Tragelement selbsttätig oder unter dem Einfluß einer auf der Achse aufsitzenden Feder (Federkippdübel) senkrecht zur Längsachse der Gewindestange ein und stützt sich beim Anziehen des Dübels mittels einer auf dem unteren Teil der Gewindestange drehbaren Mutter auf dem Boden des Hohlraumes ab. Als nachteilig erweist sich, daß der Kippdübel große Hohlraumtiefen erfordert.

Bekannt ist auch ein Spreizdübel für Hohlraumdecken, der aus einer im oberen Teil geschlitzten Dübelhülse, einem zugeordneten Gewindebolzen mit einem an einem Ende des Gewindebolzens eingedrehten und befestigten Gewindekonus sowie einer auf dem unteren Gewindeteil drehbaren Mutter mit Unterlegscheibe besteht. Der Gewindebolzen wird so in die Dübelhülse eingebracht, daß der Gewindekonus auf dem geschlitzten Spreizteil der Dübelhülse aufsitzt, während das untere Ende, das als Griff bei der Montage und zur Befestigung von Verbindungselementen dient, unten aus der Hülse ragt. Bei der Montage wird der Spreizdübel durch ein entsprechendes Bohrloch in den Hohlraum der Decke eingesteckt und der geschlitzte Spreizteil der Dübelhülse zwangsweise gespreizt, wobei der Gewindekonus durch Aufbringen eines vorgegebenen Montagedrehmoments mit Hilfe der auf dem unteren, aus der Dübelhülse ragenden Gewindeteils des Bolzens drehbaren Mutter in den geschlitzten Spreizteil der Dübelhülse gezogen wird. Dadurch preßt sich die aufgespreizte Dübelhülse gegen die hohlraumseitige Ausbruchfläche des Bohrloches und vermittelt dem Spreizdübel einen festen Sitz.

Dieser Spreizdübel ist in seiner Herstellung relativ teuer und seine Montage aufgrund der Schraubarbeit, die mit einem Drehmomentschlüssel ausgeführt werden muß, sehr zeitaufwendig.

Aus der US-PS 2,771,746 ist ein Dübel zur Befestigung von Lasten an Decken bekannt, wobei an einem Ende des Dübels ein Tragelement vorgesehen ist, das durch eine Bohrung in eine Kammer mit größerem Durchmesser als dem der Bohrung einführbar ist und das zwecks Verankerung des Dübels im eingebauten Zustand in dieser Kammer senkrecht zur Längsachse des Dübels angeordnet ist. Dieser Dübel ist zweischaftig ausgeführt, wobei die Schafte an ihren rückseitigen Flächen aneinanderfügbar sind, an ihrem oberen Ende das Tragelement bildende Vorsprünge aufweisen und an ihrem unteren Ende miteinder verbindbar sind.

Allerdings fehlt hierbei eine Abstützung gegen die Innenfläche der Bohrung.

Der Erfindung liegt deshalb die Aufgabe zugrunde, einen Dübel für Hohlraumdecken zu entwickeln, der kostengünstig herstellbar ist, eine sichere und schnelle Montage und Demontage sowie eine Abstützung gegen die Innenfläche der Bohrung erlaubt und nur geringe Hohlraumtiefen erfordert.

Diese Aufgabe wird erfindungsgemäß dadurch gelöst, daß das Tragelement eines Teilelementes in Längsrichtung des Dübels nach unten in die Bohrung der Hohlraumdecke hinein verlängert und als Abstützung gegen die Innenfläche der Bohrung vorgesehen ist.

Zur Verbesserung des Dübelsitzes in der Hohlraumdecke ist gemäß der Erfindung vorgesehen, daß die Tragelemente und die Abstützung U-Profile darstellen.

Eine andere Ausbildung der Erfindung besteht darin, daß der untere Bereich der Teilelemente des Dübels als Lasche ausgebildet ist.

Es ist sinnvoll, daß die Laschen miteinander verschraubbar sind.

Es erweist sich als vorteilhaft, daß der untere Bereich der Teilelemente des Dübels als halbkreisförmige Gewindestäbe ausgebildet und durch eine Mutter miteinander verschraubbar sind.

Die mit der Erfindung erzielten Vorteile bestehen insbesondere darin, daß ein preisgünstiger Dübel für Hohlraumdecken mit guter Abstützung gegen die Innenflächen der Bohrung zur Verfügung steht, der sich einfach, sicher und schnell montieren läßt und ebenso leicht wieder demontiert werden kann und der nur geringste Hohlraumtiefen erfordert.

Ausführungsbeispiele der Erfindung sind in der Zeichnung dargestellt und werden anhand der Zeichnung näher erläutert.

Es zeigt
- Fig. 1: ein Ausführungsbeispiel der Erfindung in zwei Ansichten und einer Schnittdarstellung,
- Fig. 2: eine Seitenansicht des Dübels aus Fig. 1 nach der Montage,
- Fig. 3: ein weiteres Ausführungsbeispiel der Erfindung in zwei Ansichten und einer Schnittdarstellung und
- Fig. 4: die Montagefolge des erfindungsgemäßen Dübels aus Fig. 3.

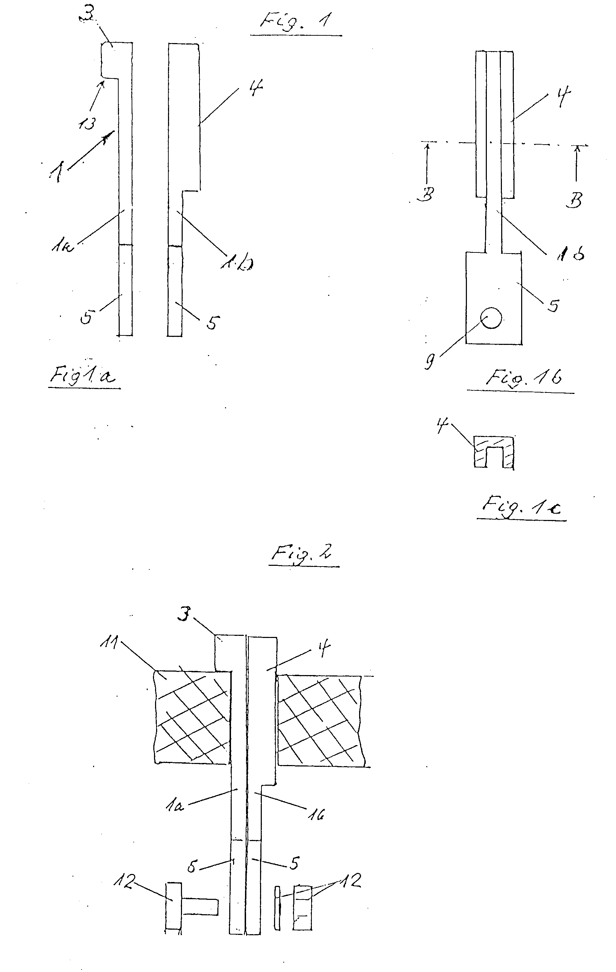

In Fig. 1 ist ein Ausführungsbeispiel des erfindungsgemäßen Dübels 1 in Seitenansicht (Fig. 1a), in Rückansicht (Fig. 1b) und in einer Schnittdarstellung (Fig. 1c) - Schnitt B - B aus Fig. 1b - dargestellt. Der Dübel besteht aus zwei zusammenwirkenden Teilelementen 1a, 1b, die an ihren rückseitigen Flächen 2 aneinanderfügbar sind und beim Setzen des Dübels miteinander verbunden werden. Jedes Teilelement 1a, 1b weist am oberen Ende ein Tragelement 3 auf, das als senkrecht zur Längsachse des Dübels 1 abstehender Vorsprung 13 ausgebildet ist. In zweckmäßiger Weise hat das Tragelement 3, wie die Schnittdarstellung in Fig. 1c zeigt, einen U-förmigen Querschnitt, der jedoch auch anders ausgebildet sein kann und dessen Abmessungen a, b so gewählt sind, daß das Tragelement 3 leicht durch eine Bohrung in einer Hohlraumdecke 11 (siehe Fig. 2) steckbar ist.

Der untere Bereich der Teilelemente 1a, 1b ist z.B. als Lasche 5 ausgebildet, die in der Vorderansicht des Teilelements 1a in Fig. 1b erkennbar und als Befestigung für die zu tragenden Lasten vorgesehen ist. In die Laschen 5 sind Bohrungen 9 eingebracht, die beim rückseitigen Aneinanderfügen der beiden Teilelemente 1a, 1b zur Deckung kommen und eine Öffnung bilden, die beim Setzen des Dübels zur Aufnahme einer Schraubenverbindung 12 (siehe Fig. 2) dient.

Möglich ist es auch, die Bohrung 9 zum Einhängen einer Last zu verwenden; dann kann die Verschraubung der beiden Teilelemente 1a, 1b über eine weitere, in der Zeichnung nicht dargestellte Bohrung in den Laschen 5 erfolgen.

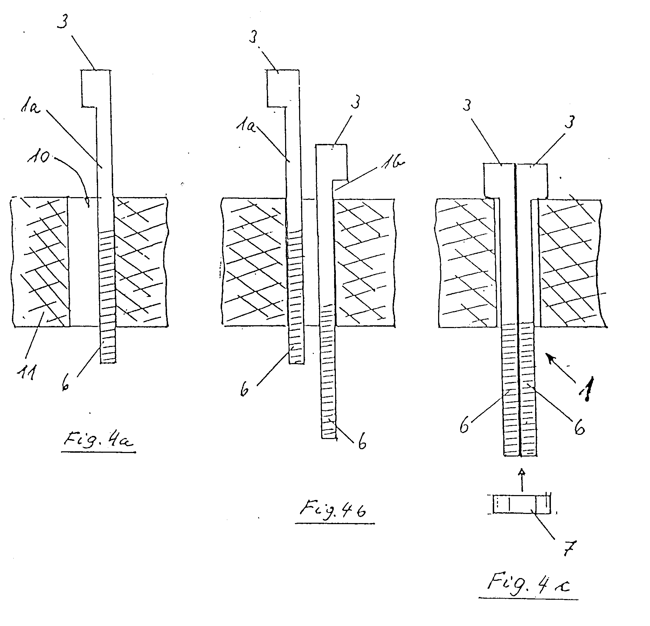

Wie die beiden Ansichten in Fig. 1a und Fig. 4b zeigen, ist das Tragelement 3 des zweiten Teilelementes 1b in Längsrichtung des Dübels 1 nach unten verlängert und dient als Abstützung 4 des Dübels 1 gegen die Innenfläche der Bohrung 10 der Hohlraumdecke 11.

Fig. 2 zeigt eine Seitenansicht des Dübels 1 aus Fig. 1 nach der Montage. Nach Einführung des ersten Teilelementes 1a in die Bohrung 10 der Hohlraumdecke 11 wird das zweite Teilelement 1b an der rückseitigen Fläche 2 des Teilelementes 1a entlanggleitend in die Bohrung 10 eingepreßt, wobei die Abstützung 4 des zweiten Teilelementes 1b sich an der Innenfläche der Bohrung 10 abstützt und das erste Teilelement 1a ebenfalls gegen die Innenfläche der Bohrung 10 drückt. Wenn beide Teilelemente 1a, 1b deckungsgleich sind, werden sie in bekannter Weise miteinander verschraubt. Nach Abschluß der Montage stützt sich das Tragelement 3 des ersten Teilelementes 1a auf dem hohlraumseitigen Rand der Bohrung 10 ab und durch die Klemmwirkung zwischen der Innenfläche der Bohrung 10 und den beiden Teilelementen 1a, 1b wird ein Verrutschen des Dübels 1 in der Bohrung 10 oder ein Lösen des Dübels 1 aus der Bohrung 10 verhindert.

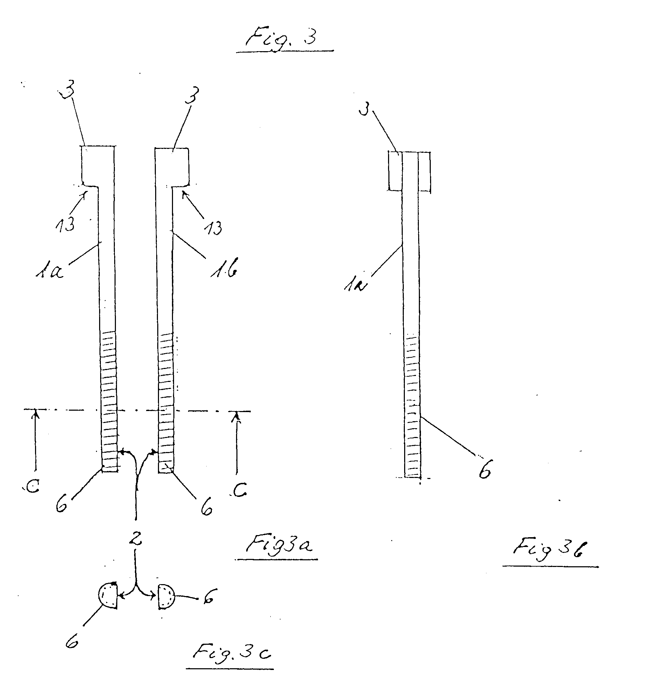

Ein weiteres Ausführungsbeispiel der Erfindung zeigt Fig. 3 in Seitenansicht (Fig. 3a), in Vorderansicht (Fig. 3b) und in Schnittdarstellung (Fig. 3c) - Schnitt C - C aus Fig. 3a -. Der Dübel 1 besteht ebenfalls aus zwei mit Tragelementen 3 versehenen Teilelementen 1a, 1b, deren untere Enden als halbkreisförmige Gewindestäbe 6 ausgebildet sind. Die Montage des Dübels 1 dieses Ausführungsbeispiels erfolgt wie in Fig. 4 dargestellt. Die Verbindung der beiden Teilelemente 1a, 1b erfolgt gemäß Fig. 4c mit Hilfe einer Mutter 7. Für die Befestigung von Lasten an dem Dübel 1 können beispielsweise weitere Muttern 7 auf den Gewindestäben 6 vorgesehen sein.

## Patentansprüche

1. Dübel zur Befestigung von Lasten an Hohlraumdecken, bestehend aus zwei zusammenwirkenden Teilelementen, die durch eine Bohrung in einen Hohlraum der Decke einführbar und an den einander zugewandten rückseitigen Flächen ihres Schafts aneinanderfügbar sind und jeweils am einführungsseitigen Ende einen als Tragelement dienenden, senkrecht zur Längsachse des Dübels nach aussen abstehenden Vorsprung aufweisen, der an der Rückseite der Hohlraumdecke abstützbar ist, wobei der untere Bereich der aus dem Bohrloch herausragenden Abschnitte der Teilelemente als Befestigung für Lasten ausgebildet ist und die beiden Teilelemente miteinander verbindbar sind, **dadurch gekennzeichnet**, daß das Tragelement (3) eines Teilelementes (1a, 1b) in Längsrichtung des Dübels nach unten in die Bohrung der Hohlraumdecke (11) hinein verlängert und als Abstützung (4) gegen die Innenfläche der Bohrung (10) vorgesehen ist.

2. Dübel nach Anspruch 1, **dadurch gekennzeichnet**, daß die Tragelemente (3) und die Abstützung (4) U-Profile darstellen.

3. Dübel nach Anspruch 1 oder 2, **dadurch gekennzeichnet**, daß der untere Bereich der Teilelemente (1a, 1b) des Dübels (1) als Lasche (5) ausgebildet ist.

4. Dübel nach einem oder mehreren der vorgenannten Ansprüche, **dadurch gekennzeichnet**, daß die Laschen (5) miteinander verschraubbar sind.

5. Dübel nach einem oder mehreren der Ansprüche 1 bis 4, **dadurch gekennzeichnet**, daß der untere Bereich der Teilelemente (1a, 1b) des Dübels (1) als halbkreisförmige Gewindestäbe (6) ausgebildet und durch eine Mutter (7) miteinander verschraubbar sind.
